# EUROPÄISCHE PATENTSCHRIFT

(11) **EP 3 499 167 B1**
(45) Veröffentlichungstag und Bekanntmachung des Hinweises auf die Patenterteilung: **31.08.2022**
(21) Anmeldenummer: 18212494.1
(22) Anmeldetag: 14.12.2018
(51) Int. Cl.: F28F 1/20, B21D 53/08, F24D 3/16, F24F 5/00

(54) **VORRICHTUNG ZUM TEMPERIEREN EINES RAUMES SOWIE VERFAHREN ZU DEREN HERSTELLUNG**
DEVICE FOR TEMPERING A ROOM AND METHOD FOR ITS MANUFACTURING
DISPOSITIF DE MISE EN TEMPÉRATURE D'UN ESPACE AINSI QUE PROCÉDÉ DE SON FABRICATION

(30) Priorität: 15.12.2017 DE 102017130090
(43) Veröffentlichungstag der Anmeldung: 19.06.2019
(60) Teilanmeldung: 22185479.7
(73) Patentinhaber: Krantz GmbH, 52072 Aachen (DE)
(72) Erfinder: Makulla, Detlef, 52134 Herzogenrath (DE); Baltes, Martin, 52074 Aachen (DE)
(74) Vertreter: Bauer, Dirk

(56) Entgegenhaltungen:
- EP-A2- 0 806 617
- EP-A2- 0 955 503
- EP-A2- 2 439 476
- CH-A- 363 775
- DE-A1-102014 110 070
- DE-A1-102015 003 280
- DE-B- 1 111 793
- DE-B3-102010 018 162
- DE-U- 1 943 578
- DE-U1- 9 315 709
- US-A- 2 722 732
- US-A- 5 363 908
- US-A1- 2007 034 364

## Beschreibung

Die Erfindung betrifft eine Vorrichtung zur Temperierung eines Raums, umfassend
- eine Mehrzahl von langgestreckten, mit ihren Längsachsen parallel zueinander angeordneten Wärmeübertragungsprofilen und
- mindestens eine Rohrleitung zur Durchströmung mit einem Wärmeträgermedium,
wobei zumindest ein Rohrleitungsabschnitt parallel zu einer Längsachse eines Wärmeübertragungsprofils verläuft und mit letzterem in wärmeübertragender Weise gekoppelt ist, wobei jeweils in einem - im Querschnitt betrachtet - Mittelbereich der Wärmeübertragungsprofile auf einer dem zu temperierenden Raum abgewandten Oberseite ein Rohrleitungsabschnitt zwischen dem Wärmeübertragungsprofil und einem in Richtung der Längsachse des Wärmeübertragungsprofils verlaufenden Kontaktprofil angeordnet ist, wobei die Wärmeübertragungsprofile - im Querschnitt betrachtet -jeweils in dem Mittelbereich einen U-förmigen Abschnitt mit zwei dem zu temperierenden Raum zugewandten Schenkeln und einer mit dem Rohrleitungsabschnitt in Kontakt stehende Basis aufweist, und dass das Kontaktprofil mit beiden Schenkeln in wärmeleitendem Kontakt steht.

### Stand der Technik

Vorrichtungen der vorgenannten Art sind aus dem Stand der Technik bekannt und werden insbesondere zur Kühlung von Räumen eingesetzt.

Die in der DE 93 15 709 U1 beschriebenen Wärmeübertragungsprofile einer Kühldecke weisen Stegabschnitte auf, an denen jeweils eine Haltevorrichtung angeformt ist. Diese Haltevorrichtungen sind als Klemmprofil ausgebildet. Das jeweilige Wärmeübertragungsprofil mit der dazugehörigen Haltevorrichtung ist als Strangpressprofil ausgeformt. Mit Hilfe der Haltevorrichtung wird das Wärmeübertragungsprofil an die mit dem Wärmeüberträgermedium durchströmte Rohrleitung geklickt. Ein Wärmeaustausch zwischen dem Wärmeträgermedium und den Wärmeübertragungsprofilen erfolgt über die Rohrleitung und die daran befestigte Haltevorrichtung.

Des Weiteren umfasst das bekannte Wärmeübertragungsprofil Schenkelabschnitte, die abgewinkelt von Längsachsen eines Stegabschnittes des Wärmeübertragungsprofils ausgehen. Dabei ist einer der zwei Schenkelabschnitte als Luftleitschenkel so in Richtung eines in Einbauposition nächstliegenden Wärmeübertragungsprofils geneigt, dass zwischen den Wärmeübertragungsprofilen ein Luftkanal in Richtung auf das über dem nächstliegenden Wärmeübertragungsprofil liegende Kühlrohr gebildet wird. Mit der Ausbildung der die Kühlrohre verblendenden Wärmeübertragungsprofile als Luftleitprofile wird angestrebt, eine besonders effektive großflächige und zugfreie Abführung hoher Wärmelasten aus dem zu kühlenden Raum durch konvektiven Wärmetransport zu ermöglichen.

Ein wesentlicher Nachteil der bekannten Wärmeübertragungsprofile ist darin zu sehen, dass fertigungsbedingt die Haltevorrichtung nicht zwingend eng an der Rohrleitung anliegt. Dies hat zur Folge, dass die wärmeübertragende Kontaktfläche zwischen der Haltevorrichtung und der Rohrleitung im Zweifelsfall nur sehr gering ist. Konstruktionsbedingt umschließt die Haltevorrichtung die Rohrleitung nämlich nicht vollständig, denn die Haltevorrichtung weist eine Öffnung auf, über die sie an die Rohrleitung geklickt werden kann.

In der DE 10 2014 110 070 A1 wird eine Vorrichtung zum Temperieren eines Raumes gemäß dem Oberbegriff des Anspruchs 1 beschrieben, welche sich aus einer Deckstrahlplatte sowie darauf angebrachten Rohrleitungen zusammensetzt. Um verlorene Strahlungswärme an den Seitenwandelementen zu reduzieren, werden die Seitenwandabschnitte mit thermisch isolierendem und schallabsorbierendem Material versehen. Nachteiliger Weise ist die wärmeübertragende Kontaktfläche zwischen der Deckstrahlplatte und den Rohrleitungsabschnitten jedoch ebenfalls sehr gering, da die Strahlplatte nur linienförmig mit den Rohren in Kontakt steht.

Das in der DE 196 15 419 C1 beschriebene Wärmeübertragungsprofil in Form eines Aluminium-Strangpressprofils umschließt hingegen das Rohr vollständig. Aufgrund der großen Fläche des Wärmeübertragungsprofils, die in den Raum ausgerichtet ist, lässt sich eine gute Wärmeübertragung mittels Strahlungswärmeaustausch erzielen. Eine Verbindung zwischen dem Aluminium-Strangpressprofil und dem mit dem Wärmeüberträgermedium durchströmten Rohrleitungsabschnitt findet durch eine geringfügige Aufweitung der Rohrleitung statt, nachdem das Aluminium-Strangpressprofil darauf geschoben wurde. Als nachteilig hat sich bei diesem Wärmeübertragungsprofil herausgestellt, dass die Herstellung der Aluminium-Strangpressprofile nicht nur zeitaufwendig sondern auch sehr kostspielig ist. Ein weiteres Wärmeübertragungsprofil wird in der DE 296 09 858 U1 dargestellt. Das Wärmeübertragungsprofil setzt sich aus zwei Blechprofilhälften zusammen, die in einem zusammengesetzten Zustand eine Rohrleitung umschließen. Die beiden Blechprofilhälften werden ineinander geschoben und bevorzugt nach Art einer Verstemmung formschlüssig oder mittels einer Verklebung stoffschlüssig miteinander verbunden, wobei der Rohrleitungsabschnitt zwischen den Blechprofilhälften angeordnet ist. Auch mittels dieser Anbringung der Wärmeübertragungsprofile an der jeweiligen Rohrleitung kann nicht gewährleistet werden, dass eine durchgehende Kontaktfläche zwischen dem Wärmeübertragungsprofil und der Rohrleitung vorhanden ist, weshalb es zu einem Wärmeübertragungsverlust kommen kann.

In der DE 10 2010 018 162 C5 werden Rohrleitungen mit Hilfe von Kontaktprofilen auf Flächenwärmetauschelementen angebracht. Dazu werden zunächst gerade ausgerichtete Rohrabschnitte zusammengestaucht, sodass diese einen D-förmigen Querschnitt aufweisen. Anschließend wird die Rohrleitung auf ein Flächenwärmetauschelement gelegt, so dass die flache Seite der Rohrleitungsabschnitte in Richtung des Flächenwärmetauschelements zeigt.

Ein Kontaktprofil sowie eine zwischen dem Kontaktprofil und den Flächenwärmetauschelement befindliche wärmeleitende Klebschicht werden über die Rohrleitungsabschnitte auf das Flächenwärmetauschelement gepresst, sodass eine stoffschlüssige Verbindung entsteht. Nachteiliger Weise ist das Flächenwärmetauschelement jedoch flächig ausgebildet, sodass ein Nachströmen von zu temperierender Luft lediglich durch eine etwaige Lochung erfolgen kann.

Auch aus der US 2007/0034364 A1 ist ein Heizsystem bekannt, das Rohrleitungen zur Durchströmung mit einem Wärmeträgermedium sowie Wärmeübertragungsprofile aufweist, wobei in den Wärmeübertragungsprofilen Rinnenabschnitte angeordnet sind, in die die Rohrleitungen zumindest abschnittsweise gesteckt werden.

Ferner ist in der EP 2 439 476 A2 ein Wärmetauscher beschrieben, der sich aus einer Rohrleitung zur Durchströmung mit einem Wärmeträgermedium und an der Rohrleitung angeordneten Rippen zusammensetzt.

### Aufgabe

Der vorliegenden Erfindung liegt nunmehr die Aufgabe zugrunde, die Vorrichtung der eingangs beschriebenen Art derart weiterzuentwickeln, dass ein möglichst effektiver Wärmeaustausch zwischen den jeweiligen Wärmeübertragungsprofilen und den dazugehörigen Rohrleitungen zustande kommt.

### Lösung

Ausgehend von einer Vorrichtung der eingangs beschriebenen Art wird die zugrunde liegende Aufgabe durch die Vorrichtung nach Anspruch 1 dadurch gelöst, dass zumindest Randbereiche des Wärmeübertragungsprofils direkt und vollflächig mit einer Raumluft des zu temperierenden Raums in Kontakt stehen und zwar sowohl auf einer dem Raum zugewandten Unterseite des Wärmeübertragungsprofils als auch auf einer dem Raum abgewandten Oberseite des Wärmeübertragungsprofils, wobei benachbarte Wärmeübertragungsprofile in horizontaler Richtung gemessen einen lichten Abstand zwischen 2,5 cm und 10 cm zueinander aufweisen.

Unter einer U-Form im Sinne der vorliegenden Anmeldung wird verstanden, dass die Schenkel des Mittelbereichs des Wärmeübertragungsprofils vorzugsweise in einem Winkel von 70° bis 110°, weiter vorzugsweise senkrecht, zu der Basis des Wärmeübertragungsprofils angeordnet sind. Die Basis ist vorzugsweise im Querschnitt linear, kann aber auch eine geringfügige Krümmung, nach oben oder nach unten "gebogen", aufweisen.

Der Vorteil des erfindungsgemäßen Aufbaus ist darin zu sehen, dass in einem Mittelbereich des Wärmeübertragungsprofils eine größere wärmeübertragende Kontaktfläche zwischen dem Kontaktprofil und dem Wärmeübertragungsprofil gebildet wird, denn das Kontaktprofil steht nicht nur mit der Basis des Wärmeübertragungsprofils in Verbindung, sondern auch die Schenkel des U-förmigen Abschnitts des Wärmeübertragungsprofils stehen mit dem Kontaktprofil wärmeleitend in Verbindung. Es erfolgt somit eine Vergrößerung der wämeübertragenden Kontaktfläche "in die Höhe", wodurch die Projektion der Wärmeübertragungsprofile in die Horizontale nicht vergrößert wird. Die Erhöhung der Wärmeübertragung in Form von Wärmeleitung von der Rohrleitung über das Kontaktprofil zu dem Wärmeübertragungsprofil in vertikale Richtung, bringt zudem den Vorteil mit sich, dass die horizontale Fläche, die zur Übertragung der Wärme von dem Wärmeübertragungsprofil an die Raumluft, nicht verkleinert werden muss. Zudem vergrößert die U-förmige Ausformung des Mittelbereichs die Stabilität des Wärmeübertragungsprofils nach dem Prinzip der Sickenausformung.

Die erfindungsgemäße Vorrichtung soll bevorzugt zum Kühlen eines Raumes eingesetzt werden. Falls erforderlich wäre eine Aufheizung eines Raumes zumindest mit einer kleinen Heizleistung möglich.

Im Sinne der vorliegenden Anmeldung weist die Vorrichtung mehrere langgestreckte Wärmeübertragungsprofile auf, die vorzugsweise zwischen 8 cm und 20 cm breit und vorzugsweise zwischen 100 cm und 250 cm lang sind.

Der Aufbau der erfindungsgemäßen Vorrichtung sieht vorzugsweise vor, dass eine Längsachse des jeweiligen Wärmeübertragungsprofils und eine Längsachse des Kontaktprofils parallel zueinander und eine senkrecht zur Decke angeordnete Mittelachse des Wärmeübertragungsprofils sowie eine senkrecht zur Decke angeordnete Mittelachse des Kontaktprofils koaxial angeordnet sind. Die Längsachsen der Wärmeübertragungsprofile werden vorzugsweise parallel und in einem Abstand zueinander ausgerichtet, wobei die Längsachsen weiterhin parallel zu Decke angeordnet sind. Der Abstand zwischen den Längsachsen der Wärmeübertragungsprofile kann zwischen 8 cm bis 40 cm, weiter vorzugsweise zwischen 10 cm und 15 cm betragen. Der lichte, in horizontale Richtung gemessene Abstand zwischen den Wärmeübertragungsprofilen beträgt wiederum zwischen 2,5 cm und 10 cm.

Ferner sind die Schenkel des jeweiligen Mittelbereichs des Wärmeübertragungsprofils vorteilhafterweise senkrecht zu der Basis des Wärmeübertragungsprofils angeordnet, weshalb vorzugsweise auch Schenkel des Kontaktprofils senkrecht zu der Basis des Wärmeübertragungsprofils angeordnet sind.

Im Sinne der vorliegenden Anmeldung ist vorgesehen, dass die Basis des Mittelbereichs der Decke des Raumes zugewandt ist, wohingegen die Schenkel in den Raum hineinragen. An den Schenkel befinden sich jeweils perforierte Randbereiche des Wärmeübertragungsprofils, wobei eine Fläche des jeweiligen Randbereichs vorzugsweise in einem Winkel von 30° bis 60° zu einer senkrecht zu Decke angeordneten Fläche der Schenkel angeordnet ist.

Weiterhin ist im Sinne der vorliegenden Anmeldung vorgesehen, dass jedem Wärmeübertragungsprofil genau eine Rohrleitung zugeordnet ist, wobei die Rohrleitung zwischen dem Wärmeübertragungsprofil und dem Kontaktprofil auf einer der Decke zugewandten Seite der Basis angeordnet ist. Die Rohrleitung weist zumindest einen Rohrleitungsabschnitt auf, der parallel zur Längsachse des Wärmeübertragungsprofils angeordnet ist. Der Rohrleitungsabschnitt ist ein Abschnitt der mindestens einen Rohrleitung. Ferner können die auf mehreren Wärmeübertragungsprofilen angeordneten Rohrleitungen in einem gemeinsamen Kreislauf zusammengefasst sein, wobei der Kreislauf vorzugsweise entweder mäanderförmig oder harfenförmig ausgestaltet ist. Das durch die Rohleitung hindurchgeleitete Wärmeträgermedium kann beispielsweise Wasser sein.

Vorteilhafterweise sind die Wärmeübertragungsprofile aus einem Blech gefertigt, und weisen vorzugsweise eine konstante Blechdicke auf, wobei eine Dicke des Wärmeübertragungsprofils vorzugsweise 0,5 mm bis 1,5 mm, weiter vorzugsweise 0,7 mm bis 1,0 mm beträgt. Die Ausformung des Wärmeübertragungsprofils aus einem Blech bietet den Vorteil, dass das Blech in seine Endform gerollt werden kann. Dieses Verfahren ist nicht nur ein schnelleres Herstellungsverfahren, sondern auch ein kostengünstigeres Herstellungsverfahren als die aus dem Stand der Technik bekannten Strangpressverfahren oder alternative Biegeverfahren.

Eine vorteilhafte Ausgestaltung der Erfindung sieht vor, dass das Kontaktprofil eine Folie ist, wobei eine Dicke der Folie vorzugsweise kleiner als 1 mm ist. Ein technisch vorteilhaftes Merkmal einer Folie ist die gute Anpassbarkeit an Konturen. Das Kontaktprofil kann sich aufgrund seiner folienähnlichen Struktur hervorragend an das Wärmeübertragungsprofil und die darauf befindlichen Rohrleitungsabschnitte anschmiegen und die Kontaktfläche zwischen dem Wärmeübertragungsprofil und dem Kontaktprofil, sowie dem Kontaktprofil und den Rohrleitungsabschnitten somit noch weiter verbessern.

Eine besonders haltbare Verbindung zwischen dem Kontaktprofil und dem Wärmeübertragungsprofil liegt vor, wenn das jeweilige Wärmeübertragungsprofil über eine Klebschicht, vorzugsweise eine wärmedurchlässige Klebschicht, mit dem Kontaktprofil verbunden ist. Aufgrund der dünnen Ausgestaltung des Wärmeübertragungsprofils und des noch dünneren Kontaktprofils ist eine Klemmverbindung zwischen beiden nur schwer möglich, weshalb die wärmeleitende Klebschicht nicht nur eine lückenlose wärmeleitende Kontaktfläche zwischen dem Wärmeübertragungsprofil und dem Kontaktprofil herstellen kann, sondern auch eine feste stoffschlüssige Verbindung zwischen dem Wärmeübertragungsprofil und dem Kontaktprofil entstehen kann.

Es wird ferner angestrebt eine möglichst große Kontaktfläche zwischen der Rohrleitung und der Basis des Mittelbereichs herzustellen, weshalb eine konstruktive Weiterentwicklung der Erfindung vorsieht, dass Rohrleitungsabschnitte im eingebauten Zustand ein D-Profil im Querschnitt aufweisen. Vorzugsweise ist der Rohrleitungsabschnitt der Rohrleitung, der auf der Oberseite des Wärmeübertragungsprofils angeordnet ist D-förmig. Die abgeflachte Seite des D-Profils soll vorzugsweise im eingebauten Zustand mit der der Decke zugewandten Seite der Basis des Wärmeübertragungsprofils in Kontakt sein.

Eine vorteilhafte Weiterentwicklung der Erfindung sieht vor, dass zwischen einer einer Decke des Raumes zugewandten Oberseite der Wärmeübertragungsprofile und der Decke mindestens ein Schallabsorber, vorzugsweise oberhalb der Rohrleitung, angeordnet ist. Mittels der Schallabsorber soll in dem Raum verursachter Schall absorbiert werden, um eine angenehme Raumakustik zu schaffen.

Damit der in dem Raum verursachte Schall zu dem mindestens einen über den Wärmeübertragungsprofilen angeordneten Schallabsorbern geleitet werden kann, ist es vorteilhaft, wenn an dem Mittelbereich angrenzende Randbereiche des Wärmeübertragungsprofils Perforationen aufweisen, wobei der freie Querschnitt vorzugsweise 10 bis 40 %, weiter vorzugsweise 15% bis 30% beträgt. Der freie Querschnitt kann je nach Bedarf ein anderer sein, denn die notwendige Schalldämmung in beispielsweise einem Großraumbüro ist eine andere wie in einem Flughafenterminal.

Folglich muss je nach Einsatzgebiet abgewogen werden, wieviel Schall absorbiert werden darf, um eine vorteilhafte Raumakustik zu schaffen und zum Beispiel Sprachdurchsagen verständlich zu machen.

Da das Kontaktprofil nicht nur mit der Basis des Wärmeübertragungsprofils, sondern auch in vertikaler Richtung mit den Schenkeln des Wärmeübertragungsprofils in wärmeübertragender Verbindung steht, geht keine in etwa horizontale Fläche des Wärmeübertragungsprofil mit Perforationen verloren.

Um die Wärmeübertragung von dem Kontaktprofil zu dem Wärmeübertragungsprofil nicht einzuschränken, ist es vorteilhaft, wenn die Perforationen lediglich in den Randbereichen des Wärmeübertragungsprofils vorhanden sind. Da eine hinreichende Wärmeübertragung in dem erfindungsgemäß flächenmäßig "nach oben" vergrößerten Mittelbereich der Wärmeübertragungsprofile erzielt werden kann, ist es möglich, einen großen Flächenanteil der Wärmeübertragungsprofile zu perforieren, wodurch wiederum eine sehr gute schallabsorbierende Wirkung erreicht wird, weil die an nicht perforierten Flächenbereichen auftretende Schallreflexion entsprechend gering ist.

Eine Weiterentwicklung der Vorrichtung sieht vor, dass an einer dem Raum zugewandten Seite einer Basis des Wärmeübertragungsprofils eine Zulufteinrichtung angeordnet ist. Mit Hilfe der Zulufteinrichtung kann zusätzlich ein gerichteter Luftstrom in den Raum eingeleitet werden. Dies ist insbesondere in den Fällen vorteilhaft, in denen der Raum aufgeheizt werden soll.

Vorteilhafterweise ist an einer dem Raum zugewandten Seite einer Basis des Wärmeübertragungsprofils ein Beleuchtungsmittel angeordnet. Somit kann auf zusätzliche Beleuchtungsmittel in dem Raum verzichtet werden und ein größerer Teil einer Fläche der Decke mit der erfindungsgemäßen Vorrichtung bedeckt werden.

Schließlich sei angemerkt, dass die verschiedenen Merkmale der Unteransprüche je einzeln für sich oder zu mehreren in beliebigen Kombinationen bei Varianten der Erfindung verwirklicht sein können.

### Ausführungsbeispiele

Die vorstehend beschriebene Erfindung wird nachfolgend anhand zweier Ausführungsbeispiele, welche in den Figuren dargestellt werden, näher erläutert.

Es zeigt:
- Fig. 1:: einen Vertikalschnitt der erfindungsgemäßen Vorrichtung in einer ersten Ausführungsform, und
- Fig. 2:: einen Vertikalschnitt eines Wärmeübertragungsprofil wie Figur 1, in einer vergrößerten Darstellung,
- Fig. 3:: eine dreidimensionale Ansicht des Wärmeübertragungsprofils gemäß Figur 2,
- Fig. 4:: einen Vertikalschnitt der erfindungsgemäßen Vorrichtung in einer zweiten Ausführungsform,
- Fig. 5:: einen Vertikalschnitt der erfindungsgemäßen Vorrichtung in einer dritten Ausführungsform,
- Fig. 6:: wie Figur 4, mit einer zusätzlichen Zulufteinrichtung in einer ersten Ausführungsform,
- Fig. 7:: wie Figur 4, mit einer zusätzlichen Zulufteinrichtung in einer zweiten Ausführungsform, und
- Fig. 8:: wie Figur 7, mit einem zusätzlichen Beleuchtungsmittel.

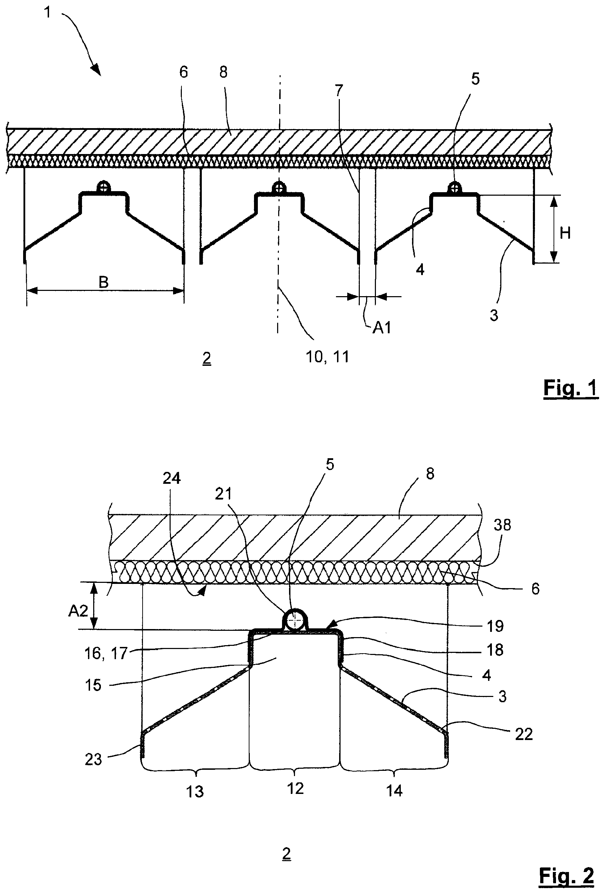

In der Figur 1 wird eine erfindungsmäße Vorrichtung **1** zur Temperierung eines Raumes **2** dargestellt. Dazu weist die Vorrichtung **1** eine Mehrzahl nebeneinander angeordneter Wärmeübertragungsprofile **3,** dem jeweiligen Wärmeübertragungsprofil **3** zugeordnete Kontaktprofile **4** sowie mindestens einen zwischen dem jeweiligen Wärmeübertragungsprofil **3** und dem dazugehörigen Kontaktprofil **4** angeordneten Rohrleitungsabschnitt **5** auf. Durch eine hier nicht dargestellte Rohrleitung, die zumindest den einen Rohrleitungsabschnitt **5** aufweist, wird ein Wärmeüberträgermedium, insbesondere Wasser, hindurchgeleitet. Mehrere Rohrleitungen der jeweiligen Wärmeübertragungsprofile **3** sind zu einem Kreislauf zusammengeschlossen, wobei die Rohrleitungen in diesem Ausführungsbeispiel harfenförmig zusammengeschaltet sind.

Da mit Hilfe der erfindungsgemäßen Vorrichtung **1** zusätzliche eine Schallabsorption in dem Raum **2** möglich sein soll, weist die Vorrichtung **1** weiterhin zumindest einen Schallabsorber **6** auf.

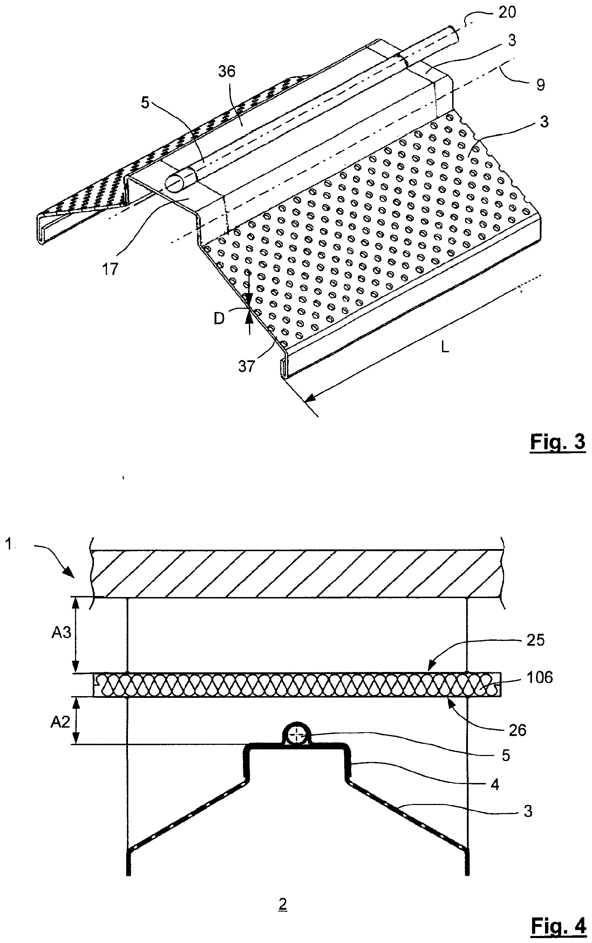

Die Wärmeübertragungsprofile **3** besitzen eine Breite **B** von 10 cm, eine Länge L von 200 cm (Figur 3) und eine Höhe **H** von 5 cm.

Mit Hilfe von Stangen **7,** beispielsweise Gewindestangen, werden die Wärmeübertragungsprofile **3** einzeln oder als vorgefertigte Gruppe an einer Decke **8** befestigt und sind horizontal gemessen in einem Abstand **A1** zueinander angeordnet, wobei der Abstand **A1** zwischen den einzelnen Wärmeübertragungsprofilen **3** 2,5 cm beträgt. Die Abstände **A1** können je nach Einsatzgebiet auch größer oder kleiner gewählt werden. Gemäß der Erfindung liegen die Abstände A1 zwischen 2,5 cm und 10 cm. Ferner sind Längsachsen **9** gemäß der Figur 3 der Wärmeübertragungsprofile **3** parallel und in einer Ebene zueinander angeordnet. In einer Projektion in einer horizontalen Ebene beträgt der von dem Wärmeübertragungsprofil **3** abgedeckte Flächenanteil üblicherweise zwischen 10% und 20%, vorliegend 15%.

Hier nicht dargestellte Längsachsen der Kontaktprofile **4** sind parallel zu den Längsachsen **9** der Wärmeübertragungsprofile **3** angeordnet. Hinzu kommt, dass Mittelachsen **10** der Kontaktprofile **4** und Mittelachsen **11** der Wärmeübertragungsprofile **3** koaxial angeordnet sind, wie in der Figur 2 dargestellt wird.

Die Figur 2 zeigt eine Schnittansicht eines einzelnen Wärmeübertragungsprofils **3** der erfindungsgemäßen Vorrichtung **1** gemäß Figur 1. Das Wärmeübertragungsprofil **3** setzt sich aus einem U-förmigen Mittelbereich **12** und zwei daran angrenzenden perforierten Randbereichen **13, 14** zusammen. Eine Öffnung **15** des U-förmigen Mittelbereichs **12** zeigt in den Raum **2** hinein, wohingegen eine Unterseite **16** des U, eine Basis **17,** zur Decke **8** hin gerichtet ist. Zwei an der Basis **17** angeordnete Schenkel **18** des U sind senkrecht zur Decke **8** ausgerichtet und reichen bis zu den Randbereichen **13, 14.** Auf einer der Decke **8** zugewandten Oberseite **19** des Wärmeübertragungsprofils **3** beziehungsweise der Basis **17** des Wärmeübertragungsprofils **3** befindet sich der Rohrleitungsabschnitt **5** unmittelbar auf dem Wärmeübertragungsprofil **3,** so dass eine Längsachse **20** des Rohrleitungsabschnitts **5** parallel zu der Längsachse **9** des Wärmeübertragungsprofils **3** angeordnet ist, wie aus Figur 3 hervorgeht.

Zur wärmeübertragenden Verbindung des Rohrleitungsabschnitts **5** und des Wärmeübertragungsprofils **3** wird das Kontaktprofil **4** auf den Mittelbereich **12** des Wärmeübertragungsprofils **3** gepresst, wobei zwischen dem Wärmeübertragungsprofil **3** und dem Kontaktprofil **4** eine hier nicht sichtbare, gut wärmeleitende Klebschicht, vorzugsweise in Form einer dünnen Folie, die eine Dicke von weniger als 1 mm aufweist, angeordnet ist, und die das Wärmeübertragungsprofil **3** mit dem Kontaktprofil **4** verbindet. Vor dem Pressvorgang wird die Klebschicht auf dem Kontaktprofil **4** angebracht, so dass die Klebschicht das Kontaktprofil **4** auch teilweise an dem Rohrleitungsabschnitt **5** befestigt. Das Kontaktprofil **4** schmiegt sich bei dem Pressvorgang derart an das Wärmeübertragungsprofil **3** und den Rohrleitungsabschnitt **5** an, dass eine große wärmeübertragende Kontaktfläche zwischen dem Wärmeübertragungsprofil **3** und dem Kontaktprofil **4** sowie dem Rohrleitungsabschnitt **5** und dem Kontaktprofil **4** entsteht, das heißt, dass das Kontaktprofil **4** weitestgehend U-förmig ist, wobei ein im Querschnitt halbovalförmiger Dom **21** in einem Bereich der Basis **17** des Wärmeübertragungsprofils **3** vorhanden ist, in dem der Rohrleitungsabschnitt **5** angeordnet ist.

Die in den Kontaktprofilen **4** befindlichen Rohrleitungsabschnitte **5** weisen eine D-Form auf, so dass ein wärmeübertragender Kontakt zwischen dem Rohrleitungsabschnitt **5** und dem Wärmeübertragungsprofil **3** vergrößert wird. Das Kontaktprofil **4** deckt bevorzugt den gesamten Mittelbereich **12** des Wärmeübertragungsprofils **3** ab und reicht bis fast an die beiden Randbereiche **13, 14.** Im vorliegenden Fall beträgt der Perforationsgrad in den beiden Randbereichen **13, 14,** also ein freier Querschnitt der aufgrund von Perforationen **22** entsteht, **20**%. Ein Lochdurchmesser der jeweiligen Perforationen beträgt 4 mm. Die Perforationen **22** befinden sich in dem gesamten Randbereich **13, 14** mit Ausnahme von senkrecht zu der Decke ausgerichteten freien Randstreifen **23** der Randbereiche **13, 14.**

Die zwischen den Randstreifen **23** und dem Mittelbereich **12** angeordneten, perforierten Randbereiche **13, 14** sind in einem Winkel von **30**° zur Decke **8** angeordnet. In einer Projektion in einer horizontalen Ebene beträgt ein Flächenanteil der Randbereiche **13, 14** 60 %.

Die Perforationen **22** sollen Schall durch das Wärmeübertragungsprofil **3** hindurch in Richtung des Schallabsorbers **6,** der an einer Unterseite **38** der Decke **8** in einem Abstand **A2** von 10 cm zu der Basis **17** des Wärmeübertragungsprofils **3** und in einem Abstand von wenigen Millimetern zu der Decke **8** angeordnet ist, leiten. Der Schallabsorber **6** ist flächendeckend unter der Decke **8** befestigt und weist in diesem Ausführungsbeispiel eine strukturierte Oberfläche **24** auf, damit mehr Schall absorbiert werden kann.

Die Figur 3 zeigt einen Abschnitt des Wärmeübertragungsprofils **3** und des darauf angeordneten Rohrleitungsabschnitts **5** gemäß Figur 1. Der Rohrleitungsabschnitt 5 ist auf einer Oberseite **36** des Mittelbereichs **12** des Wärmeübertragungsprofils **3** angeordnet. Die Längsachse **20** des Rohrleitungsabschnitts **5** ist parallel zu der Längsachse **9** des Wärmeübertragungsprofils **3** und mittig auf der Basis **17** des Mittelbereichs **12** (Figur 2) angeordnet. Ferner ist in der Figur 3 auch gut erkennbar, dass die Randbereiche **13, 14** (Figur 2) des Wärmeübertragungsprofils **3** Perforationen **22** aufweisen.

Das Wärmeübertragungsprofil 3 ist aus einem Blech **37** gefertigt, welches eine Dicke **D** von 0,7 mm aufweist.

Die Figur 4 zeigt einen Ausschnitt einer zweiten Ausführungsform der erfindungsgemäßen Vorrichtung **1.** Der Aufbau des Wärmeübertragungsprofils **3,** des Rohrleitungsabschnitts **5** und des Kontaktprofils **4** entsprechen dem Aufbau der Vorrichtung **1** gemäß der Figur 1. Der Schallabsorber **106** ist jedoch nicht flächendeckend an der Decke **8** angebracht, sondern jedem Wärmeübertragungsprofil **3** wird ein einzelner Schallabsorber **106** zugeordnet, der in einem zweiten Abstand **A3** zur Decke **8,** zwischen der Decke **8** und dem Wärmeübertragungsprofil **3,** in einer horizontalen Ausrichtung zur Decke **8** angeordnet ist. Der zweite Abstand **A3** zwischen der Decke **8** und einer der Decke **8** zugewandten Oberseite **25** des Schallabsorbers **106** beträgt 10 cm. Ferner ist der erste Abstand **A2** zwischen der Basis **17** des Wärmeübertragungsprofils **3** und einer dem Raum **2** zugewandten Unterseite **26** des Schallabsorbers **106** 10 cm. Hier nicht dargestellte Längsachsen der Schallabsorber **106** sind parallel zu den Längsachsen **9** (Figur 3) der Wärmeübertragungsprofile **3** angeordnet.

Aufgrund des hier nicht sichtbaren Abstandes zwischen den einzelnen Schallabsorbern **106,** der 10 cm beträgt, wird ein hier nicht dargestellter Spalt zwischen den einzelnen Schallabsorbern **106** ausgebildet, durch den Schall hindurchgeleitet werden kann.

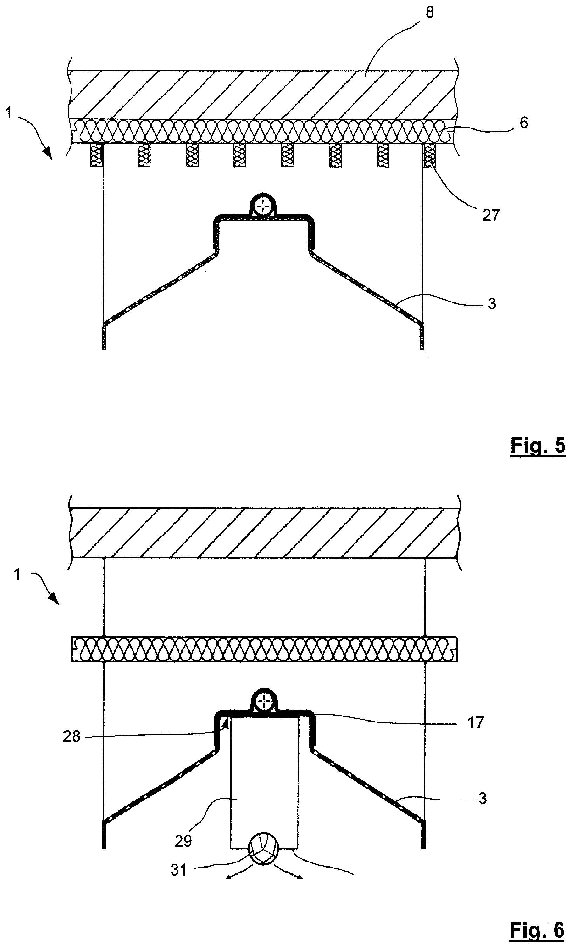

Der in der Figur 5 dargestellte Ausschnitt der erfindungsgemäßen Vorrichtung **1** entspricht weitestgehend der Vorrichtung **1** gemäß der Figur 1, allerdings sind parallel zu der Längsachse **9** (Figur 3) des Wärmeübertragungsprofils **3** und senkrecht zur Decke **8** ausgerichtete weitere streifenförmige Schallabsorber **27** auf dem flächendeckenden Schallabsorber **6** angebracht.

Die Figur 6 zeigt einen Ausschnitt die erfindungsgemäße Vorrichtung **1** gemäß Figur 4, wobei an der Basis **17** des Wärmeübertragungsprofils **3** auf einer dem Raum **2** zugewandten Seite **28** der Basis **17** eine Zulufteinrichtung **29** angeordnet ist. Diese Zulufteinrichtung **29** weist an ihrer dem Raum **2** zugewandten Unterseite **30** ein oder mehrere hintereinander angeordnete Luftaustrittselemente **31** auf, mittels dessen beziehungsweise derer Zuluft ungefähr horizontal in den Raum **2** eingeleitet werden kann. Dies führt zu einer zusätzlichen Senkung oder Erhöhung der Temperatur in einem Raum **2** sowie der Möglichkeit, auch Primärluft in den Raum **2** einzubringen.

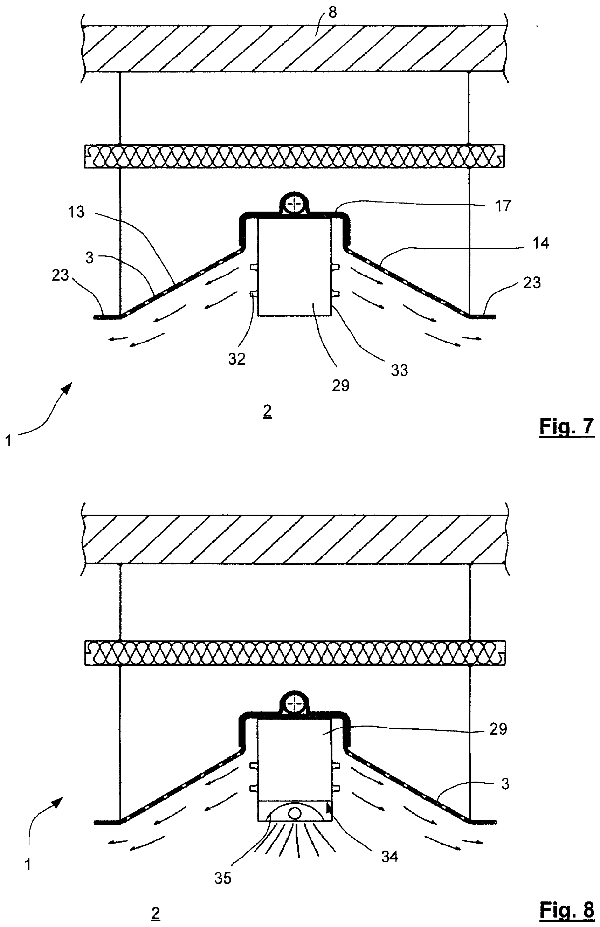

Die Figur 7 zeigt eine Vorrichtung **1** gemäß der Figur 4, wobei -wie bei der Figur 6-zusätzlich an der Basis **17** des Wärmeübertragungsprofils **3** eine Zulufteinrichtung **29** angeordnet ist. Die Zulufteinrichtung **29** weist in diesem Fall mehrere Düsen **32,** die in zwei horizontalen Düsenreihen in den senkrecht zu der Decke **8** angeordnete Seitenwände **33** der Zulufteinrichtung **29** angeordnet sind, auf. Mit Hilfe der Düsen **32** kann Zuluft entlang der Randbereichs **13**, **14** in den Raum **2** eingeleitet werden. Um eine horizontale Ausströmung der Zuluft zu erreichen, sind die Randstreifen **23** des Randbereichs **13**, **14** in diesem Ausführungsbeispiel nicht vertikal, sondern horizontal zur Decke **8** angeordnet sind.

Die Figur 8 zeigt eine erfindungsgemäße Vorrichtung **1** gemäß der Figur 7, wobei sich das in der Figur 8 dargestellte Ausführungsbeispiel dahingehend von dem Ausführungsbeispiel gemäß Figur 7 unterscheidet, dass an einer dem Raum **2** zugewandten Unterseite **34** der Zulufteinrichtung **29** mehrere Beleuchtungsmittel **35** in einer Reihe parallel zu einer hier nicht dargestellten Längsachse des Wärmeübertragungsprofils **3** angebracht ist.

Abschließend sei bemerkt, dass die verschiedenen Ausführungsbeispiele den Schutzumfang nicht beschränken, der durch den Wortlaut der Ansprüche definiert ist.

### Bezugszeichenliste

- B: Breite
- L: Länge
- H: Höhe
- A1: Abstand
- A2: Abstand
- A3: Abstand
- D: Dicke

- 1: Vorrichtung
- 2: Raum
- 3: Wärmeübertragungsprofil
- 4: Kontaktprofil
- 5: Rohrleitungsabschnitt
- 6, 106: Schallabsorber
- 7: Stangen
- 8: Decke
- 9: Längsachse
- 10: Mittelachse
- 11: Mittelachse
- 12: Mittelbereich
- 13: Randbereich
- 14: Randbereich
- 15: Öffnung
- 16: Unterseite
- 17: Basis
- 18: Schenkel
- 19: Seite
- 20: Längsachse
- 21: Dom
- 22: Perforationen
- 23: Randstreifen
- 24: Oberfläche
- 25: Oberseite
- 26: Unterseite
- 27: Schallabsorber
- 28: Seite
- 29: Zulufteinrichtung
- 30: Unterseite
- 31: Luftaustrittselement
- 32: Düsen
- 33: Seitenwände
- 34: Unterseite
- 35: Beleuchtungsmittel
- 36: Oberseite
- 37: Blech
- 38: Unterseite

## Patentansprüche

1. Vorrichtung (1) zur Temperierung eines Raums (2), umfassend
- eine Mehrzahl von langgestreckten, mit ihren Längsachsen (9) parallel angeordneten, vorzugsweise metallischen, Wärmeübertragungsprofilen (3) und
- mindestens eine Rohrleitung zur Durchströmung mit einem Wärmeträgermedium,
wobei zumindest ein Rohrleitungsabschnitt (5) parallel zu einer Längsachse (9) eines Wärmeübertragungsprofils (3) verläuft und mit letzterem in wärmeübertragender Weise gekoppelt ist, wobei jeweils in einem - im Querschnitt betrachtet - Mittelbereich (12) der Wärmeübertragungsprofile (3) auf einer dem zu temperierenden Raum (2) abgewandten Oberseite ein Rohrleitungsabschnitt (5) zwischen dem Wärmeübertragungsprofil (3) und einem in Richtung der Längsachse (9) des Wärmeübertragungsprofils (3) verlaufenden Kontaktprofil (4) angeordnet ist, **wobei** die Wärmeübertragungsprofile (3) - im Querschnitt betrachtet - jeweils in dem Mittelbereich (12) einen U-förmigen Abschnitt mit zwei dem zu temperierenden Raum (2) zugewandten Schenkeln (18) und einer mit dem Rohrleitungsabschnitt (5) in Kontakt stehende Basis (17) aufweist, und dass das Kontaktprofil (4) mit beiden Schenkeln (18) in wärmeleitendem Kontakt steht, **dadurch gekennzeichnet, dass** zumindest Randbereiche (13,14) des Wärmeübertragungsprofils (3) direkt und vollflächig mit einer Raumluft des zu temperierenden Raums (2) in Kontakt stehen und zwar sowohl auf einer dem Raum (2) zugewandten Unterseite des Wärmeübertragungsprofils (3) als auch auf einer dem Raum (2) abgewandten Oberseite (19) des Wärmeübertragungsprofils (3), wobei benachbarte Wärmeübertragungsprofile (3) in horizontaler Richtung gemessen einen lichten Abstand (A1) zwischen 2,5 cm und 10 cm zueinander aufweisen.

2. Vorrichtung nach Anspruch 1, **dadurch gekennzeichnet, dass** die Wärmeübertragungsprofile (3) aus einem Blech (37) gefertigt sind, und vorzugsweise eine konstante Blechdicke aufweisen, wobei eine Dicke (D) des Wärmeübertragungsprofils (3) vorzugsweise 0,5 bis 1,5 mm, weiter vorzugsweise, 0,7 mm bis 1,0 mm beträgt.

3. Vorrichtung nach Anspruch 1 oder 2, **dadurch gekennzeichnet, dass** das Kontaktprofil (4) eine Folie ist, wobei eine Dicke der Folie vorzugsweise kleiner als 1 mm ist..

4. Vorrichtung nach mindestens einem der Ansprüche 1 bis 3, **dadurch gekennzeichnet, dass** das jeweilige Wärmeübertragungsprofil (3) über eine wärmedurchlässige Klebschicht mit dem Kontaktprofil (4) verbunden ist.

5. Vorrichtung nach mindestens einem der Ansprüche 1 bis 4, **dadurch gekennzeichnet, dass** die Rohrleitung im eingebauten Zustand zumindest abschnittsweise ein D-Profil im Querschnitt aufweist, vorzugsweise in dem Rohrleitungsabschnitt (5).

6. Vorrichtung nach mindestens einem der Ansprüche 1 bis 5, **dadurch gekennzeichnet, dass** an den Mittelbereich (12) angrenzende Randbereiche (13, 14) des Wärmeübertragungsprofils (3) Perforationen (22) aufweisen, wobei der freie Querschnitt vorzugsweise 10 bis 40 %, weiter vorzugsweise 15% bis 30% beträgt.

7. Vorrichtung nach mindestens einem der Ansprüche 1 bis 6, **dadurch gekennzeichnet, dass** zwischen einer einer Decke (8) des Raumes (2) zugewandten Oberseite der Wärmeübertragungsprofile (3) und der Decke (8) mindestens ein Schallabsorber (6, 106), vorzugsweise oberhalb der Rohrleitung, angeordnet ist.

8. Vorrichtung nach einem der Ansprüche 6 oder 7, **dadurch gekennzeichnet, dass** die Perforationen (22) lediglich in den Randbereichen (13, 14) vorhanden sind.

## Claims

1. Device (1) for the temperature control of a space (2), comprising
- a plurality of elongated, preferably metallic, heat transfer profiles (3) with their longitudinal axes (9) arranged in parallel and
- at least one pipeline for a heat transfer medium to flow through,
wherein at least one pipeline section (5) runs parallel to a longitudinal axis (9) of a heat transfer profile (3) and is coupled with the latter in a heat-transmitting manner, wherein, in each case, in a middle region (12) of the heat transfer profiles (3), viewed in the cross-section, on a top side facing away from the temperature (2), a pipeline section (5) is arranged between the heat transfer profile (3) and a contact profile (4) running in the direction of the longitudinal axis (9) of the heat transfer profile (3), wherein the heat transfer profile (3), in the middle region (12), viewed in the cross-section, respectively comprises a U-shaped section with two limbs (18) facing the temperature chamber (2) and a base (17) in contact with the pipeline section (5), and that the contact profile (4) is in thermally conductive contact with both limbs (18), **characterized in that** at least peripheral regions (13,14) of the heat transfer profile (3) are in direct and full-surface contact with a space air of the space (2) to be temperature controlled both on a bottom side of the heat transfer profile (3) facing the space (2) as well as on a top side (19) of the heat transfer profile (3) facing away from the space (2), wherein adjacent heat transfer profiles (3) have a clear distance (A1) between 2.5 cm and 10 cm to each other when measured in the horizontal direction.

2. Device according to Claim 1, **characterized in that** the heat transfer profiles (3) are made of a sheet metal (37), and preferably have a constant sheet thickness, wherein a thickness (D) of the heat transfer profile (3) is preferably 0.5 to 1.5 mm, more preferably, 0.7 mm to 1.0 mm.

3. Device according to Claim 1 or 2, **characterized in that** the contact profile (4) is a film, wherein a thickness of the film is preferably less than 1 mm.

4. Device according to at least one of the Claims 1 to 3, **characterized in that** the respective heat transfer profile (3) is connected to the contact profile (4) via a heat-permeable adhesive layer.

5. Device according to at least one of the Claims 1 to 4, **characterized in that,** in the installed state, the pipeline comprises a D-profile in its cross-section at least in sections, preferably in the pipeline section (5) .

6. Device according to at least one of Claims 1 to 5, **characterized in that** edge regions (13, 14) of the heat transfer profile (3) adjacent to the middle region (12) comprise perforations (22), wherein the free cross-section is preferably 10 to 40%, more preferably 15% to 30%.

7. Device according to at least one of the Claims 1 to 6, **characterized in that** at least one sound absorber (6, 106) is arranged between a top side of the heat transfer profiles (3) facing a ceiling (8) of the space (2) and the ceiling (8), thereby being preferably arranged above the pipeline.

8. Device according to any one of the Claims 6 or 7, **characterized in that** the perforations (22) are present only in the edge regions (13, 14).

## Revendications

1. Dispositif (1), destiné à tempérer une pièce (2), comprenant :
- une pluralité de profilés (3) transmetteurs de chaleur allongés, placés à la parallèle par leurs axes longitudinaux (9), de préférence métalliques, et
- au moins une tuyauterie, destinée à être traversée par un agent caloporteur,
au moins un tronçon (5) de tuyauterie s'écoulant à la parallèle d'un axe longitudinal (9) d'un profilé (3) transmetteur de chaleur et étant connecté à ce dernier de manière à transmettre la chaleur, chaque fois dans une zone médiane (12) (considérée dans la section transversale) des profilés (3) transmetteurs de chaleur, sur une face supérieure opposée à la pièce (2) à tempérer, un tronçon (5) de tuyauterie étant placé entre le profilé (3) transmetteur de chaleur et un profilé (4) de contact s'écoulant dans la direction de l'axe longitudinal (9) du profilé (3) transmetteur de chaleur, les profilés (3) transmetteurs de chaleur comportant chaque fois dans la zone médiane (12) (considérée dans la section transversale) un tronçon en forme de U, pourvu de deux branches (18) dirigées vers la pièce (2) à tempérer et une base (17) qui est en contact avec le tronçon (5) de tuyauterie et le profilé (4) de contact étant en contact transmetteur de chaleur avec les deux branches (18), **caractérisé en ce qu'**au moins des zones de bordure (13, 14) du profilé (3) transmetteur de chaleur sont en contact direct et à pleine surface avec un air ambiant de la pièce (2) à tempérer et ceci, aussi bien sur une face inférieure du profilé (3) transmetteur de chaleur qui fait face à la pièce (2), qu'également sur une face supérieure (19) du profilé (3) transmetteur de chaleur qui est opposée à la pièce (2), mesurés dans la direction horizontale, des profilés (3) transmetteurs de chaleur voisins présentant une distance libre (A1) réciproque comprise entre 2,5 cm et 10 cm.

2. Dispositif selon la revendication 1, **caractérisé en ce que** les profilés (3) transmetteurs de chaleur sont fabriqués en une tôle (37) et présentent de préférence une épaisseur de tôle constante, une épaisseur (D) du profilé (3) transmetteur de chaleur s'élevant de préférence à de 0,5 à 1,5 mm, de manière préférentielle par ailleurs à de 0,7 mm à 1,0 mm.

3. Dispositif selon la revendication 1 ou 2, **caractérisé en ce que** le profilé (4) de contact est un film, une épaisseur du film étant de préférence inférieure à 1 mm.

4. Dispositif selon au moins l'une quelconque des revendications 1 à 3, **caractérisé en ce que** le profilé (3) transmetteur de chaleur respectif est relié par l'intermédiaire d'une couche collante perméable à la chaleur avec le profilé (4) de contact.

5. Dispositif selon au moins l'une quelconque des revendications 1 à 4, **caractérisé en ce que** la tuyauterie, lorsqu'elle est montée comporte au moins par endroits dans la section transversale un profil en D, de préférence dans le tronçon (5) de tuyauterie.

6. Dispositif selon au moins l'une quelconque des revendications 1 à 5, **caractérisé en ce que** des zones de bordure (13, 14) adjacentes à la zone médiane (12) du profilé (3) transmetteur de chaleur comportent des perforations (22), la section transversale libre s'élevant de préférence à de 10 à 40 %, de manière préférentielle par ailleurs à de 15 % à 30 %.

7. Dispositif selon au moins l'une quelconque des revendications 1 à 6, **caractérisé en ce qu'**entre une face supérieure des profilés (3) transmetteurs de chaleur qui est dirigée vers un plafond (8) de la pièce (2) et le plafond (8) est placé, de préférence au-dessus de la tuyauterie, au moins un absorbeur acoustique (6, 106) .

8. Dispositif selon au moins l'une quelconque des revendications 6 ou 7, **caractérisé en ce que** les perforations (22) sont présentes uniquement dans les zones de bordure (13, 14).
